Europäisches Patentamt

European Patent Office

Office européen des brevets

(11) Numéro de publication: **0 167 416 B1**

## (12) FASCICULE DE BREVET EUROPEEN

(45) Date de publication de fascicule du brevet: **26.02.92**  (51) Int. Cl.⁵: **F16L 59/14**, D21F 1/60

(21) Numéro de dépôt: **85400840.6**

(22) Date de dépôt: **29.04.85**

(54) **Procédé destiné à réaliser une structure alvéolaire destinée à recouvrir une surface curviligne.**

(30) Priorité: **11.05.84 FR 8407282**

(43) Date de publication de la demande:
**08.01.86 Bulletin 86/02**

(45) Mention de la délivrance du brevet:
**26.02.92 Bulletin 92/09**

(84) Etats contractants désignés:
**BE CH DE GB IT LI NL SE**

(56) Documents cités:
**CH-A- 343 803**
**DE-A- 3 210 320**
**FR-A- 2 251 773**
**US-A- 2 815 795**
**US-A- 3 259 961**

(73) Titulaire: **INSTITUT FRANCAIS DU PETROLE**
**4, Avenue de Bois Préau**
**F-92502 Rueil-Malmaison(FR)**

(72) Inventeur: **Huvey, Michel**
**2, avenue des Pinsons**
**F-78380 Bougival(FR)**

## Description

La présente invention concerne un procédé pour réaliser une structure alvéolaire, notamment destinée à recouvrir un cylindre ou plus généralement une surface gauche.

Il est connu de réaliser des corps alvéolaires plans (habituellement nommés nid d'abeille) par empilement de feuilles ou de bandes rectilignes que l'on colle partiellement les unes aux autres suivant des zones transversales ayant toutes des côtés transversaux parallèles entre eux, l'obtention du produit définitif se faisant par traction, perpendiculairement au plan des feuilles ou des bandes, pour obtenir des alvéoles prismatiques à forme hexagonale plus ou moins régulière. Les alvéoles obtenues ont des parois dont les cotés, déterminés par les lignes d'assemblage, sont tous parallèles entre eux.

Un tel produit ne peut être posé sur un cylindre que si le rapport de son épaisseur au diamètre de ce cylindre est très faible. Dès que ce rapport s'élève, des contraintes importantes apparaissent dans les parois qui peuvent, soit flamber dans la zone en compression, soit se déchirer dans la zone en traction.

Des produits similaires, présentant une plus grande rigidité dans une direction privilégiée, sont réalisés à partir de l'assemblage de bandes préformées, car ils ne sont pas expansibles. Ces produits sont plats et ne peuvent recouvrir, à moins de subir des déformations préjudiciables à leurs propriétés mécaniques, que des surfaces sensiblement planes.

De tels produits sont décrits dans les brevets américains 2.815.795, 3.100.928, 3.139.375 et 3.259.961 dans les brevets français 2.131.029 et 2.131.068 et dans la demande de brevet allemand 3.210.320.

Fabriqués à plat, ainsi qu'il est clair d'après la figure 5 du brevet français 2.131.029, ces produits ont la caractéristique, qui seule rend leur emploi possible sur des tubes, de ne pas être assemblés par toute leur surface d'assemblage à plat, mais seulement par un filet de soudure, de brasure ou par un rivetage échancreur, ce qui laisse des possibilités de déformation des surfaces d'assemblage initiales, celles-ci pouvant diminuer dans la partie en traction et augmenter dans les parties mises en compression, moyennant des contraintes n'entrainant pas la rupture lors de la pose sur le cylindre.

Il est évident que la limitation de la surface d'assemblage à une ligne entraîne des concentrations de contraintes en service, indépendamment du fait qu'une telle structure, si elle était réalisée à l'aide de plusieurs tôles situées en regard les unes des autres mais non parfaitement liées, serait vraisemblablement soumise à la corrosion.

Le procédé suivant l'invention évite ces inconvénients et permet de réaliser des structures de forte épaisseur pouvant se poser naturellement, avec des efforts très faibles et des contraintes se limitant à celles de l'expansion, dans le cas où le corps est fabriqué à l'état comprimé, sur des parois cylindriques dont le rayon de courbure local peut être faible.

La structure alvéolaire obtenue selon la présente invention est notamment destinée à recouvrir au moins en partie une surface cylindrique, elle comporte des alvéoles délimitées par plusieurs parois, au moins une alvéole comportant au moins une paroi ayant au moins deux arêtes sensiblement parallèles entre-elles et au moins une paroi comportant au moins deux arêtes non parallèles entre-elles, chacunes de ces arêtes sensiblement parallèles et non parallèles entre-elles, ayant une projection orthogonale de longueur non nulle sur une normale à ladite surface cylindrique passant par l'arête considérée.

La structure alvéolaire selon l'invention est obtenue à partir de bandes courbes, c'est-à-dire que la ou les bandes comporte au moins une partie non rectiligne.

Une structure comportant plusieurs alvéoles, obtenue selon l'invention peut être réalisée à partir d'au moins une bande courbe comportant plusieurs zones disposées transversalement par rapport à cette bande, certaines d'entre elles correspondant à des parois ayant des arêtes sensiblement parallèles et certaines autres correspondant à des parois ayant des arêtes non parallèles.

Certaines de ces zones peuvent être des zones d'assemblage dont chacune est destinée à être solidarisée avec une autre zone d'assemblage alors que d'autres peuvent être des zones libres ne servant pas à l'assemblage, mais reliant entre elles les zones d'assemblage.

Certaines au moins des zones d'assemblage peuvent correspondre à des parois ayant des arêtes sensiblement parallèles.

Certaines au moins desdites zones libres peuvent correspondre à des parois ayant des arêtes sensiblement parallèles.

Une alvéole comportant au moins une paroi ayant deux arêtes sensiblement parallèles définissant un premier plan et au moins une paroi ayant deux arêtes non parallèles coplanaires définissant un deuxième plan peut être avantageusement disposée sur la surface à couvrir de telle manière que l'angle défini par le premier plan avec la direction définie par l'une des génératrices du cylindre soit inférieur à l'angle défini par le deuxième plan avec cette même direction.

La structure obtenue selon l'invention pourra comporter une ou plusieurs bandes éventuellement sensiblement hélicoïdales.

La structure obtenue selon l'invention peut comporter plusieurs bandes, chacune de ces bandes se refermant sur elle-même.

La structure alvéolaire peut comporter des alvéoles ayant une forme intermédiaire entre celle d'un tronc de prisme et celle d'un tronc de pyramide.

La base de cette alvéole peut être sensiblement hexagonale et éventuellement constituer un hexagone régulier.

On ne sortira pas du cadre de la présente invention si la structure alvéolaire est destinée à recouvrir au moins partiellement une surface définie par un cylindre de révolution.

La structure alvéolaire obtenue selon l'invention peut comporter au moins une paroi appartenant à un plan sensiblement perpendiculaire à la direction de la génératrice du cylindre à recouvrir au moins partiellement.

La structure alvéolaire obtenue selon l'invention peut comporter au moins une paroi appartenant à un plan sensiblement parallèle à la direction d'une génératrice du cylindre à recouvrir au moins partiellement.

Ainsi le procédé selon l'invention consiste à réaliser une structure alvéolaire destinée à recouvrir une surface cylindrique fictive ou non, comportant les étapes suivantes :

a) on définit une bande s'étendant sensiblement dans un plan et courbe, c'est-à-dire comportant au moins une partie non rectiligne, cette bande étant délimitée par une courbe homothétique de la courbe externe délimitant la section droite du cylindre dans un rapport donné par une courbe obtenue en portant à une certaine distance vers l'extérieur, une courbe parallèle, à la courbe homothétique, représentant l'épaisseur de ladite structure ;

b) on définit sur ladite bande une ligne de référence parallèle au bord intérieur de ladite bande de longueur donnée ;

c) on repère sur ladite ligne de référence des couples de points régulièrement espacés et successifs, pour délimiter les parois des alvéoles ;

d) pour chacun des points d'un couple, on définit une droite parallèle à une droite transversale de direction sensiblement perpendiculaire soit à ladite ligne de référence soit à la droite joignant les deux points dudit couple, ces deux droites délimitant sur ladite bande une paroi dite à côtés parallèles ;

e) on assemble entre-elles soit des parois à côtés parallèles soit des parois à côtés non parallèles pour obtenir ladite structure.

La présente invention concerne également un procédé pour réaliser une structure alvéolaire destinée à recouvrir une surface cylindrique fictive ou non, comportant les étapes suivantes :

a) on définit une bande hélicoïdale formée de spires sensiblement planes et de diamètre donné, ayant une hauteur radiale correspondant à l'épaisseur de ladite structure ;

b) on définit sur ladite bande une ligne circulaire de référence ;

c) on repère sur ladite ligne de référence des couples de points régulièrement espacés et successifs, pour délimiter les parois des alvéoles ;

d) pour chacun des points d'un couple, on définit une droite parallèle à une droite transversale de direction sensiblement perpendiculaire soit à ladite ligne de référence soit à la droite joignant les deux points dudit couple, ces deux droites délimitant sur ladite bande une paroi dite à côtés parallèles ;

e) on assemble entre-elles soit des parois à côtés parallèles soit des parois à côtés non parallèles pour obtenir ladite structure.

Ladite droite transversale peut passer sensiblement au voisinage du point situé au milieu du segment rectiligne ou curviligne défini par la ligne de référence joignant les deux points dudit couple.

On ne sortira du cadre de la présente invention en réalisant un préformage de la bande avant l'assemblage. Dans l'éventualité où la structure ainsi obtenue est aplatissable, on pourra la comprimer de façon à faciliter l'opération de mise en place de la structure, cette mise en place de la structure s'effectuant par simple libération des forces de la compression.

De même, on ne sortira pas du cadre de la présente invention en assemblant la bande avant formage.

Dans ce cas, il sera éventuellement possible de comprimer après formage la structure ainsi obtenue, la mise en place de cette structure se faisant de la même manière qu'indiqué précédemment.

Bien entendu, la portion du cylindre à garnir peut être recouverte de la structure alvéolaire selon l'invention aussi bien sur sa face convexe que sur sa face concave.

La présente invention sera mieux comprise et ses avantages apparaitront plus clairement à la description qui suit d'exemples particuliers nullement limitatifs illustrés par les figures annexées parmi lesquelles :

- la figure 1 représente un cylindre sur lequel est positionnée une alvéole,
- la figure 2 montre une portion de surface de ce cylindre,
- la figure 3 illustre une hélice destinée à permettre la réalisation de la structure alvéolaire,
- la figure 4 représente deux mailles hexagonales vues en coupe,
- la figure 5 montre une portion de bande servant à la constitution de la garniture alvéolaire,

- la figure 6 représente une surface cylindrique à garnir,
- la figure 7 montre une couronne permettant de réaliser cette garniture,
- la figure 8 illustre le procédé selon l'invention permettant de tracer les limites de certaines parois, et
- les figures 9 à 16 montrent différentes variantes de réalisation de la garniture alvéolaire.

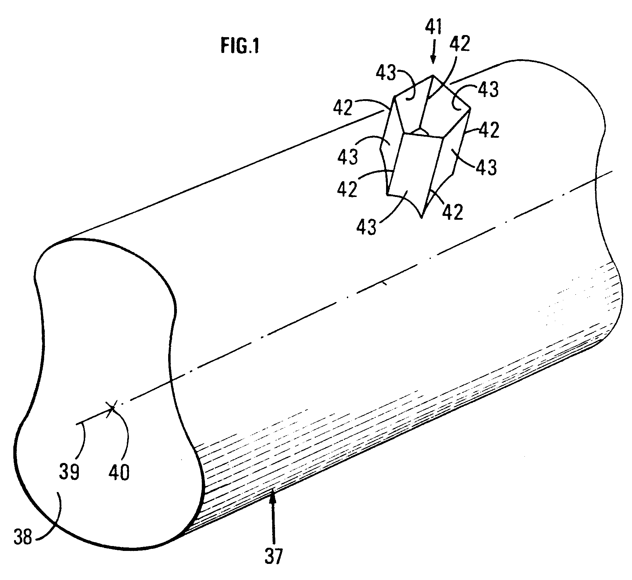

La figure 1 représente un cylindre 37. Ce cylindre possède une section droite 38. L'axe 39 du cylindre est défini par la droite passant par le centre de gravité 40 de la section droite 38 parallèle à la direction génératrice du cylindre.

Une alvéole 41 est représentée sur le cylindre 37. Elle comporte des arêtes 42 qui délimitent des parois 43.

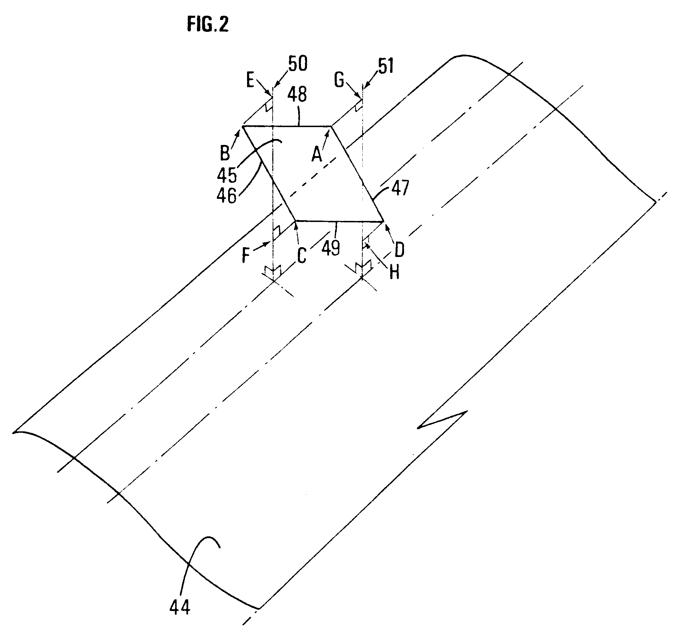

La figure 2 représente une partie 44 de la surface d'un cylindre. La référence 45 désigne une paroi délimitée par quatre points A, B, C et D qui définissent quatre arêtes 46, 47, 48 et 49.

Chacune des arêtes 46 et 47 a une projection orthogonale respectivement EF et GH, de longueur non nulle sur une normale respectivement 50 et 51 à la surface cylindrique 44. Les arêtes 46 et 47 seront qualifiées d'arêtes à composante radiale non nulle ou plus simplement d'arêtes radiales.

On remarquera que sur la figure 2, la paroi 45 ne touche pas la surface cylindrique 44. En effet, ceci est possible selon l'invention, notamment dans le cas où, par exemple, une paroi voisine à la paroi 45 touche la surface cylindrique 44.

De plus, il est bien évident que la surface à recouvrir 44 n'a pas besoin d'exister matériellement, puisque la structure alvéolaire peut avoir suffisamment de rigidité pour se supporter elle-même.

Deux exemples particuliers, nullement limitatifs, permettront de mieux comprendre la présente invention. Dans ces deux exemples, le produit alvéolaire est obtenu à partir d'une bande courbe.

## PREMIER EXEMPLE

On suppose que l'on désire garnir, d'un produit alvéolaire à maille hexagonale longitudinale (ce terme sera expliqué plus loin) sur une longueur, ou hauteur b, une surface cylindrique de révolution S définie par un cercle 57 de rayon R et par une direction génératrice D perpendiculaire au plan P contenant le cercle 57.

Le terme longitudinal signifie que les mailles possèdent des parois parallèles à la direction génératrice D.

On commence par choisir une surface de référence en l'occurence un cylindre de révolution dont l'intersection avec le plan contenant le cercle 57 définit un cercle dit de référence 58.

On choisit l'épaisseur e du produit alvéolaire et la dimension de la longueur de la maille m.

On construit plusieurs bandes hélicoïdales qui une fois assemblées et mises en forme, formeront la structure alvéolaire.

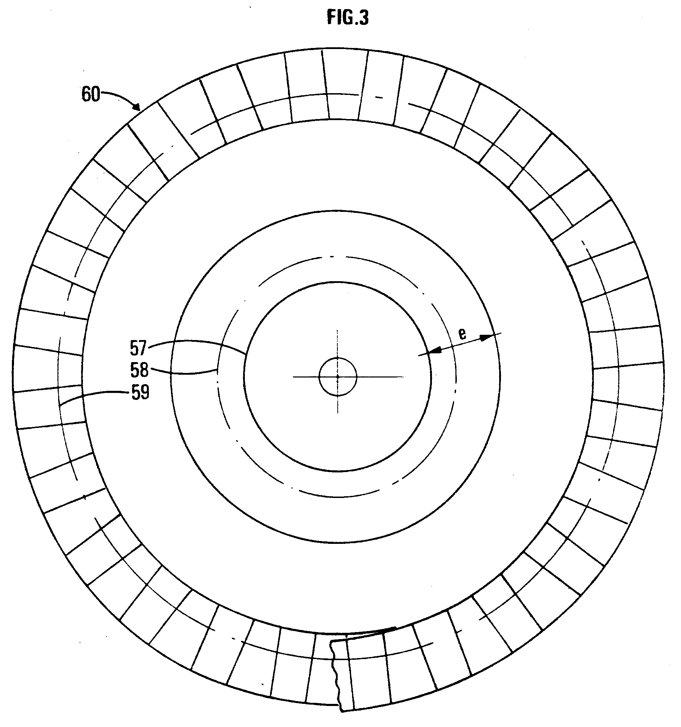

Avant d'être mises en forme, ces bandes sont généralement sensiblement plates. La figure 3 représente l'une de ces bandes hélicoïdales 60, la ligne 59 représente sensiblement la trace de la surface de référence sur ladite bande hélicoïdale 60. La trace 59 n'est pas strictement un cercle, mais elle en est proche.

Dans le cas de mailles hexagonales régulières, on cherche le nombre X de fois que la grandeur $Y = m\sqrt{3}$ est contenue dans la longueur de la courbe de référence, c'est-à-dire le cercle 58. Ce nombre X est arrondi au nombre entier A le plus proche.

Il est bien évident que la valeur de Y est fonction de la forme de la maille.

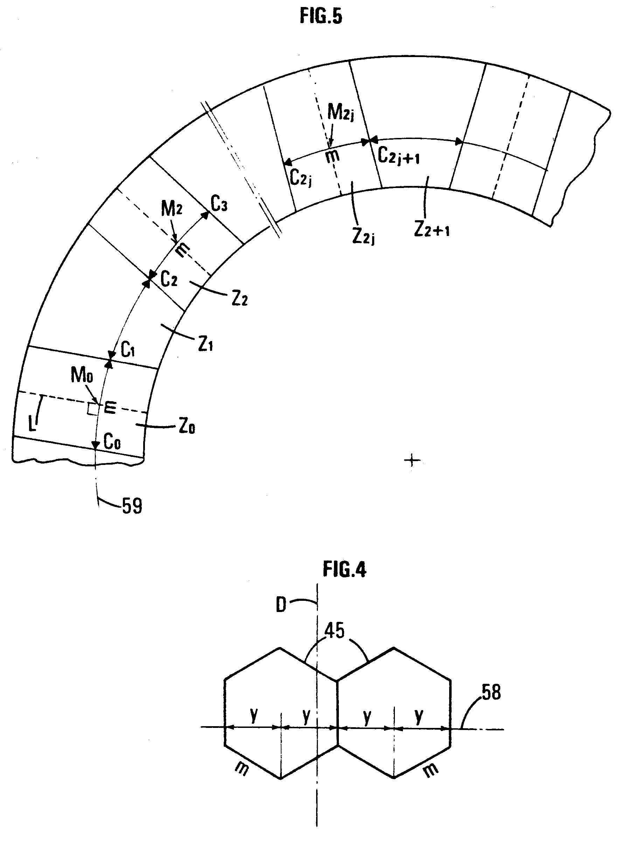

La figure 4 explique l'origine de la valeur de $m\sqrt{3}$ pour une maille hexagonale régulière. En fait, le nombre A correspond sensiblement au nombre entier de mailles que contiendra le cercle de référence.

La position de celui-ci peut être choisie de telle sorte que la valeur de X soit entière égale à A et/ou la valeur m peut être modifiée pour la même raison.

On construit 2A hélices à plat, c'est-à-dire que l'hélice n'est pas pliée de manière à former les différentes parois des mailles.

Ces hélices ont un rayon interne de 8R/3, et externe de 8R/3 + e.

Cette hélice 60, ou bande, a une longueur égale à 4b/3, cette longueur étant considérée sur la ligne de référence 59, b désigne la longueur de la surface cylindrique à garnir.

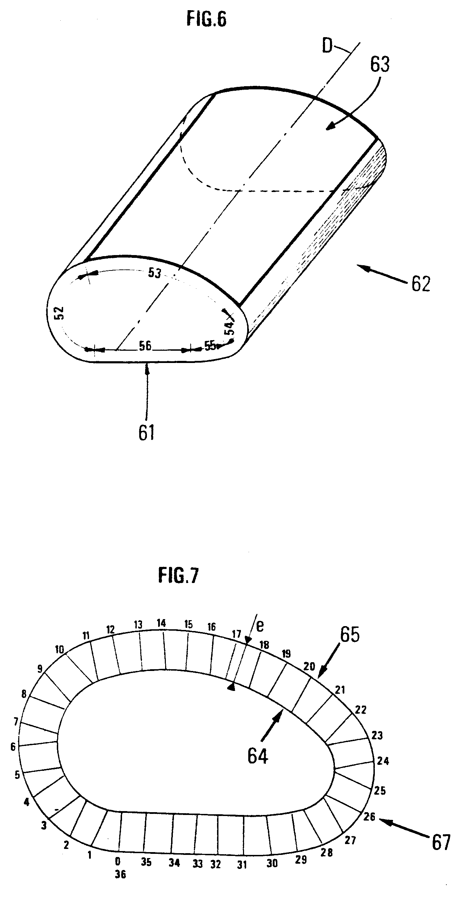

Sur cette ligne 59, on trace des points régulièrement espacés référencés $C_0$, $C_1$, $C_2...C_{2j}$, $C_{2j+1}...$, ces points sont espacés de la longueur m (Fig. 5). Au milieu $M_0$, $M_2...M_{2j}...$ des couples de points respectifs $C_0$, $C_1$ ; $C_2$, $C_3$ ;...; $C_{2j}$, $C_{2j+1}$ ;..., on trace une ligne L perpendiculaire à la ligne de référence 59, et parallèlement à cette ligne L, deux traits passant par $C_0$ et $C_1$. On procède de même pour les points $C_2$ et $C_3$, et ainsi de suite.

On détermine ainsi des zones $Z_0$, $Z_1...Z_{2j}...$ à bords alternativement parallèles $Z_0$, $Z_2...Z_{2j}...$ et non parallèles $Z_1$, $Z_3...Z_{2j+1}...$

Les zones à bords parallèles pourront être collées sur les zones correspondantes d'une hélice semblable alternativement par dessus et par dessous. Ainsi, les 2A hélices sont imbriquées les unes dans les autres.

Cet ensemble d'hélices peut être stocké à plat. En redressant progressivement cet ensemble le long de la génératrice du cylindre à garnir, celui-là s'expanse et prend sensiblement la forme de la portion de cylindre à recouvrir ainsi que la forme alvéolaire prévue (en l'occurrence une forme hexagonale). La première et la dernière hélices sont ensuite assemblées de manière à refermer la garniture alvéolaire.

Pour couvrir une surface cylindrique quelconque 62, telle que celle représentée à la figure 6 qui est définie par une section droite limitée par une courbe plane 61 et par une direction génératrice D, on partage cette courbe 61 en secteurs de rayon de courbure sensiblement constant 52, 53, 54, 55 et 56. Les rayons de courbures de chacun de ces secteurs étant R52, R53, R54, R55 et R56 respectivement. On remarque que R56 est infini car le secteur 56 est défini par un segment droit. Chacun de ces secteurs engendre une portion, ou zone, de la surface à garnir par une translation parallèle à la direction génératrice D du cylindre ainsi le secteur 53 engendre la portion 63.

Pour recouvrir cette surface, on procède de même que pour le cylindre de révolution défini précédemment, mais en utilisant des ensembles d'hélices dont chacun sert à recouvrir une portion de cylindre 63 et non la totalité d'un cylindre. Ainsi, on réalise des paquets d'hélices multiples non superposables.

En ouvrant le premier paquet de multihélice le long de la génératrice du cylindre à recouvrir, celui-ci s'expanse et prend la forme du nid de guêpe alvéolaire (si les assemblages ont été bien faits). On procède de même avec le deuxième paquet et l'on constate que les faces parallèles aux génératrices du cylindre, du premier et du deuxième paquet, ne requièrent qu'une légère translation pour pouvoir s'ajuster presque exactement les unes aux autres. Cette translation effectuée, on peut procéder à l'assemblage des deux faisceaux.

On procède de même pour le troisième paquet, puis pour le quatrième et ainsi de suite jusqu'au dernier que l'on raccorde de même à l'avant dernier et au premier.

La surface cylindrique est alors totalement recouverte d'un produit alvéolaire dit "longitudinal" car les zones collées sont sensiblement parallèles à la génératrice du cylindre.

## DEUXIEME EXEMPLE

On veut garnir le même cylindre que précédemment d'un produit alvéolaire à maille circonférencielle (c'est-à-dire que deux parois d'une même maille appartiennent à des plans perpendiculaires à la direction génératrice).

Dans ce nouvel exemple, on considère également une maille hexagonale, régulière, de côté m et d'épaisseur e.

On trace la courbe homothétique 64 de la courbe externe délimitant la section droite du cylindre dans le rapport 4/3 et on porte, à la distance e vers l'extérieur, une courbe parallèle 65.

Ces deux courbes délimitent une surface à l'intérieur de laquelle il sera possible de trouver une "ligne de référence", parallèle au bord intérieur, de longueur $4dm$ ou $(2d+1)m$, d étant un nombre entier. Si ce n'est pas le cas, on corrigera m d'une très faible valeur pour que la longueur d'une ligne de référence L soit divisible par $4m$ ou par $m(2d+1)$. Il est possible d'envisager deux cas :

- CAS 1) $L/4m = d$ couronne ou hélice à recouvrement multiple
- CAS 2) $L/2m = 2d+1$ hélice simple

CAS 1 : couronne

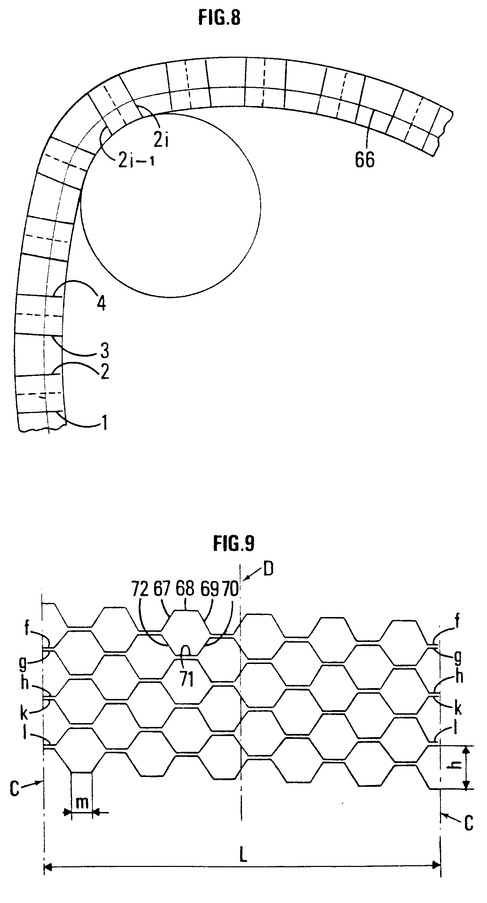

Sur la ligne de référence 66 (sur la figure 7 la ligne de référence est confondue avec la ligne externe 65), on place des points régulièrement espacés de la longueur m, soient 1, 2, 3, 4...$i$, $2i+1$,... (Fig. 8). Au milieu des points 1 et 2, on trace une droite passant par le centre de courbure local et parallèlement à cette droite, deux segments passant par les points 1 et 2. On procède de même pour les points 3 et 4, $2i-1$ et $2i$, $2i+1$ et $2i+2$, etc.

On définit ainsi des zones alternées à bords parallèles et à bords non parallèles.

Cette couronne 67 étant définie (Fig. 7), sera reproduite en autant d'exemplaires que la longueur de la génératrice b de la surface à garnir compte de fois $m\sqrt{3/2}$.

On encollera sur la première couronne les zones 2-3, 6-7, 10-11, ...$4d+2$-$4d$-3..., posera dessus la couronne suivante que l'on encollera sur les zones 4-5, 8-9, ...$4d$-$4d+1$..., posera dessus la troisème couronne que l'on encollera comme la première, puis la quatrième que l'on traite comme la seconde, et ainsi de suite jusqu'à la dernière.

L'assemblage terminé, il suffira de tirer sur les couronnes d'extrémité dans la direction de la génératrice pour que le produit s'expanse en prenant une forme très proche de celle homothétique du cylindre à garnir.

Lorsque la forme des alvéoles, au niveau de la ligne de référence sera hexagonale régulière, la forme interne du produit sera très proche de celle du cylindre à garnir.

Un léger usinage permettra, si besoin est, de les rendre identiques.

Le même dessin pourra être utilisé pour un ruban hèlicoïdal ayant, à plat, la même forme que la couronne. Ceci entrainera seulement une zone d'assemblage multiépaisseurs donnant localement une rigidité radiale un peu plus grande sur le cylindre.

CAS 2 : L/2m = 2d + 1 : hélice simple

On procède comme précédemment, la seule différence étant que l'on revient à l'identique du point de départ au bout de deux spires au lieu d'une.

On remarquera que dans l'exemple 2, il n'est pas nécessaire de partager la section à garnir en secteurs de rayon de courbure constant.

On ne sortira pas du cadre de la présente invention en réalisant d'autres types de mailles que des mailles hexagonales régulières.

Les figures 9 à 17 illustreront certaines variantes possibles selon la présente invention. Ces figures sont des développées de la garniture alvéolaire, vue selon une coupe au niveau de la surface de référence. La direction D désignera sur ces figures la direction génératrice des cylindres.

La référence C désigne la ligne suivant laquelle le cylindre de garniture a été découpé pour dessiner la surface développée. Ainsi, sur ces figures, les deux lignes désignées par la référence C se touchent lorsque le cylindre et reconstitué.

Lorsque, au voisinage de ces deux lignes désignées par C, deux points ou deux parois ont les mêmes références alphabétiques, c'est qu'ils ou elles sont adjacents(es) sur une même portion de bande lorsque le cylindre est reconstitué.

La figure 9 représente la développée d'une structure alvéolaire constituée à partir d'une seule bande hélicoïdale ce qui correspond au cas 2 du deuxième exemple. La longueur des segments 68 et 71 est égale à m, les longueurs des parois 69 et 72 sont identiques égales à $m_1$ et les parois 67 et 70 sont de longueurs identiques égales à $m_2$. $m_1$ est supérieur à m et $m_2$ est inférieur à m. La différence entre $m_1$ et $m_2$ supérieur à m et $m_2$ est inférieur à m. La différence entre $m_1$ et $m_2$ permet de déplacer la bande hélicoïdale par rapport à un plan perpendiculaire à l'axe du cylindre de la hauteur H d'une maille sur deux tours.

Malgré cette différence de hauteur, la garniture ainsi constituée est aplatissable car la longueur cumulée des parois 67, 68 et 69 appartenant à une même alvéole et situées d'un même côté d'une ligne joignant deux zones de collage est égale à la longueur cumulée des parois 70, 71 et 72 appartenant à cette même alvéole mais situées de l'autre côté de ladite ligne. La longueur moyenne de $m_1$ et $m_2$ peut être égale à m. Deux tours d'hélice successifs ont une longueur qui diffère légèrement de $m_2$ - $m_1$. Toutefois, on peut construire des hélices de diamètres constants, la différence étant compensée par une légère modification de l'angle des parois des alvéoles.

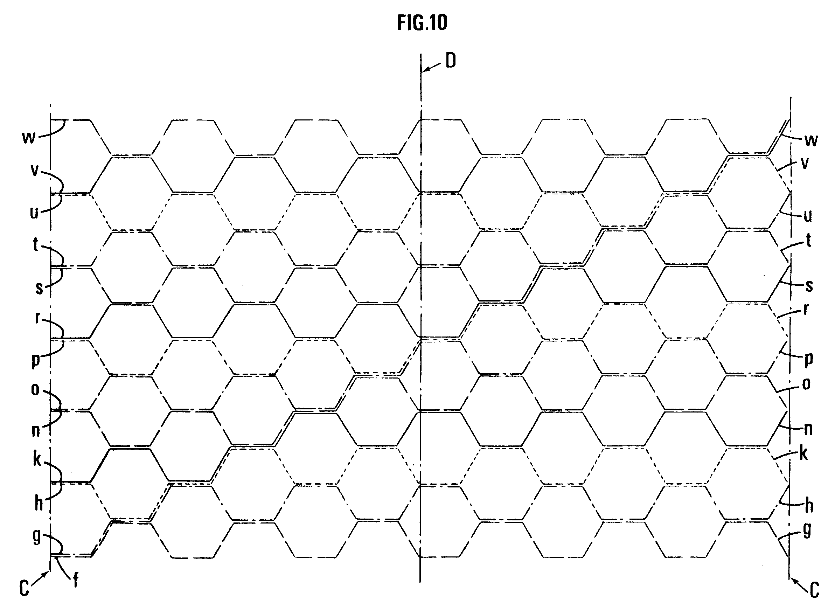

La figure 10 représente une structure alvéolaire comportant des hexagones réguliers constitués à partir d'une seule bande hélicoïdale, mais comportte des zones d'assemblage triple.

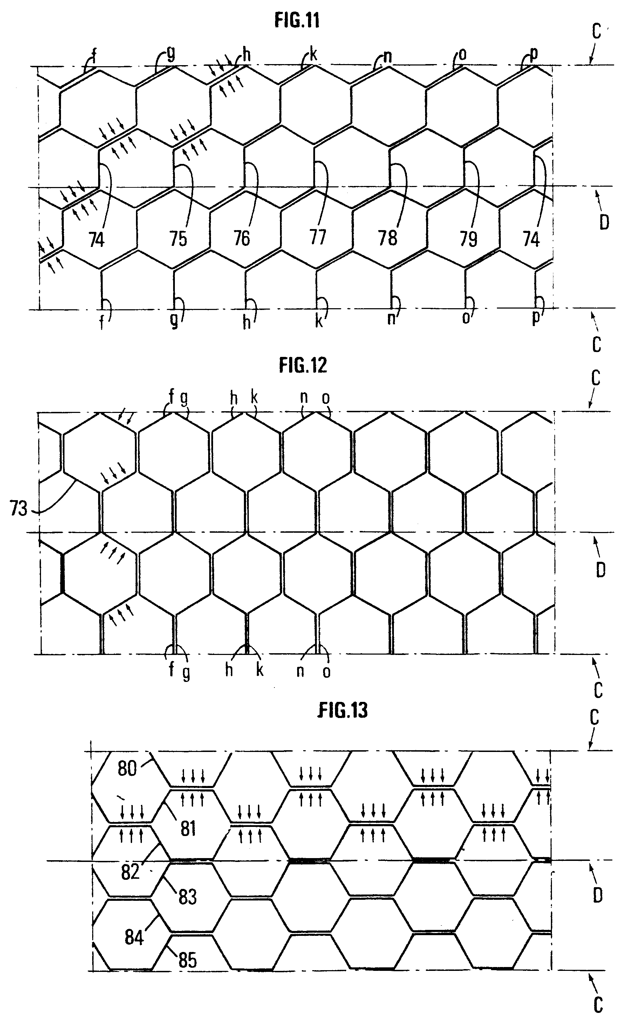

La figure 11 représente une structure alvéolaire à maille circonférentielle comportant plusieurs hélices 74, 75, 76, 77, 78 et 79 imbriquées les unes aux autres.

Les flèches indiquent les parois à côtés parallèles.

La figure 12 illustre le cas de couronnes simples 73 dont la ligne de référence est homothétique de la courbe qui engendre la surface à couvrir. Ce cas a été décrit dans l'exemple 2, cas 1.

La figure 13 illustre le cas d'une garniture à maille longitudinale réalisée à partir de plusieurs hélices 80, 81, 82, 83, 84 et 85.

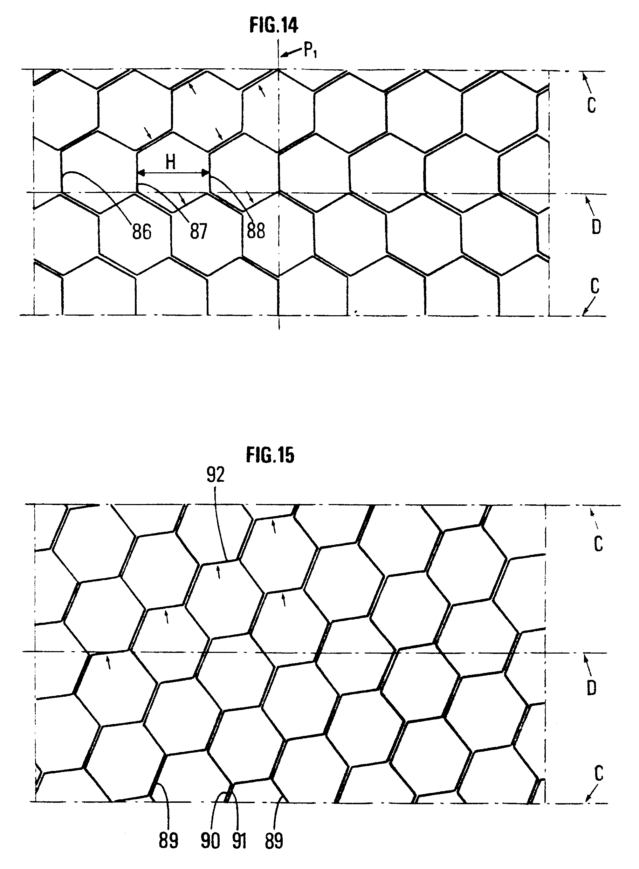

La figure 14 illustre le cas d'une garniture à maille circonférentielle comportant des couronnes 86, 87 et 88 qui chacune quitte de plus d'une hauteur de maille H un plan P1 perpendiculaire à l'axe du cylindre passant par un point de cette couronne 87.

Les lignes de référence de ces couronnes ne sont pas homothétiques de la ligne engendrant la surface à couvrir. Les flèches désignent les parois à côtés parallèles.

La figure 15 représente une garniture à mailles ni circonférencielles, ni radiales. Cette structure comporte plusieurs hélices 89, 90 et 91 imbriquées les unes aux les autres. Les flèches indiquent les parois à côtés parallèles qui correspondent généralement aux parois dont la direction de l'intersection avec la surface de référence 92 se rapproche le plus de la direction génératrice D.

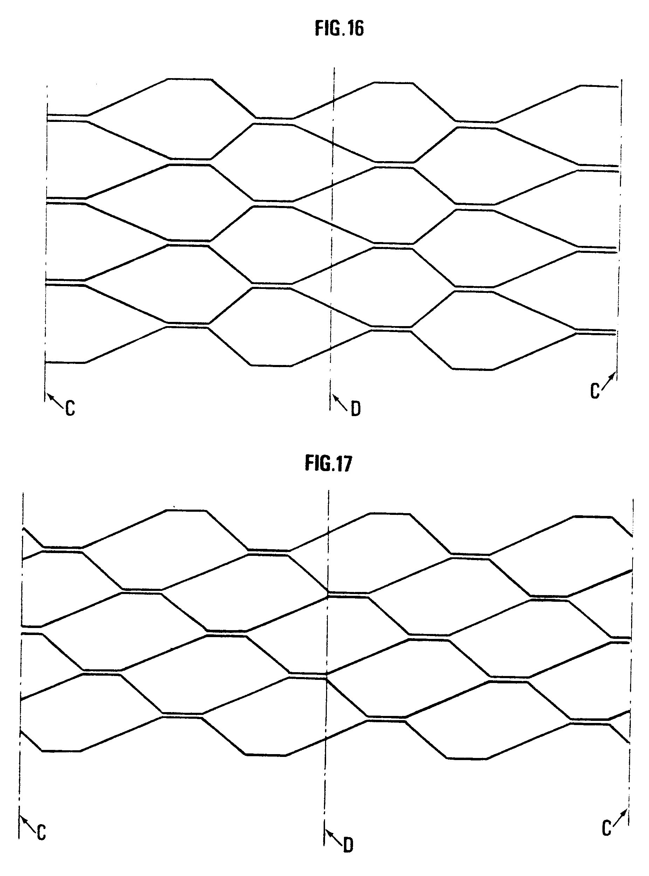

Les figures 15 et 16 illustrent des mailles hexagonales non régulières mais qui restent tout de même aplatissables.

On ne sortira pas du cadre de la présente invention en réalisant d'autres formes de mailles, même si elles ne permettent pas à la garniture d'être aplatissable.

On ne sortira pas du cadre de la présente invention en donnant aux bords intérieurs des bandes une forme particulière adaptée à ce qu'une fois mis en place ces bords touchent exactement la surface à garnir. Il en va de même pour les bords extérieurs.

La garniture selon la présente invention peut être utilisée pour isoler thermiquement des canalisations servant notamment au transport de fluides chauds ou froids, tels des produits pétroliers (pétroles lourds ou gaz naturel liquéfié).

Pour ce faire, les alvéoles de la garniture pourront être remplies de matériaux ayant des propriétés d'isolation thermique et la garniture pourra être recouverte d'au moins une gaine.

Le matériau d'isolation thermique pourra être un produit moussé.

Une telle structure, canalisation plus garniture, plus alvéole, présente un réél avantage car elle peut être soumise à des pressions externes ou différentielles importantes sans pour autant provoquer l'écrasement du matériau servant d'isolant thermique. En effet, les efforts radiaux sont supportés principalement par la garniture alvéolaire.

De telles structures pourront également être utilisées comme matériau léger de coeur dans des structures sandwich non planes.

**Revendications**

1. Procédé pour réaliser une structure alvéolaire destinée à recouvrir une surface cylindrique fictive ou non, comportant les étapes suivantes :

   a) on définit une bande s'étendant sensiblement dans un plan et courbe, c'est-à-dire comportant au moins une partie non rectiligne, cette bande étant délimitée par une courbe homothétique (64) de la courbe externe délimitant la section droite du cylindre dans un rapport donné et par une courbe obtenue en portant, à une certaine distance (e) vers l'extérieur, une courbe parallèle (65) à la courbe homothétique, (e) représentant l'épaisseur de ladite structure ;

   b) on définit sur ladite bande une ligne de référence (59) parallèle au bord intérieur de ladite bande de longueur donnée ;

   c) on repère sur ladite ligne de référence des couples de points ($C_0$, $C_1$ - $C_2$, $C_3$ - $C_{2j}$, $C_{2j+1}$) régulièrement espacés et successifs, pour délimiter les parois des alvéoles ;

   d) pour chacun des points d'un couple, on définit une droite parallèle à une droite transversale (1) de direction sensiblement perpendiculaire soit à ladite ligne de référence soit à la droite joignant les deux points dudit couple, ces deux droites délimitant sur ladite bande une paroi dite à côtés parallèles ;

   e) on assemble entre-elles soit des parois à côtés parallèles soit des parois à côtés non parallèles pour obtenir ladite structure.

2. Procédé pour réaliser une structure alvéolaire destinée à recouvrir une surface cylindrique fictive ou non, comportant les étapes suivantes :

   a) on définit une bande hélicoïdale formée de spires sensiblement planes et de diamètre donné, ayant une hauteur radiale (e) correspondant à l'épaisseur de ladite structure ;

   b) on définit sur ladite bande une ligne circulaire de référence ;

   c) on repère sur ladite ligne de référence des couples de points ($C_0$, $C_1$ - $C_2$, $C_3$ - $C_{2j}$, $C_{2j+1}$) régulièrement espacés et successifs, pour délimiter les parois des alvéoles ;

   d) pour chacun des points d'un couple, on définit une droite paralléle à une droite transversale (1) de direction sensiblement perpendiculaire soit à ladite ligne de référence soit à la droite joignant les deux points dudit couple, ces deux droites délimitant sur ladite bande une paroi dite à côtés parallèles ;

   e) on assemble entre-elles soit des parois à côtés parallèles soit des parois à côtés non parallèles pour obtenir ladite structure.

3. Procédé selon l'une des revendications 1 ou 2, caractérisé en ce que ladite droite transversale passe sensiblement au voisinage du point situé au milieu du segment, rectiligne ou curviligne, défini par la ligne de référence joignant les deux points dudit couple.

4. Procédé selon l'une des revendications 1 à 3, caractérisé en ce que l'on place ladite bande pour former au moins une alvéole comportant au moins une paroi (92) ayant deux arêtes sensiblement parallèles définissant un premier plan et comportant au moins une paroi ayant deux arêtes non parallèles coplanaires définissant un deuxième plan, et pour que l'alvéole ainsi formée soit de telle manière que l'angle défini par le premier plan avec la direction définie par l'une des génératrices (d) du cylindre soit inférieur à l'angle défini par le deuxième plan avec cette même direction.

5. Procédé selon l'une des revendications 1 à 4, caractérisé en ce que l'on utilise plusieurs bandes sensiblement hélicoïdales.

6. Procédé selon l'une des revendications 1 à 5, caractérisée en ce que l'on utilise plusieurs bandes, chacune de ces bandes se refermant sur elle-même.

7. Procédé selon l'une des revendications 1 à 6, caractérisé en ce que on dispose la bande pour qu'au moins une paroi appartienne à un plan sensiblement perpendiculaire à la direction de la génératrice dudit cylindre.

8. Procédé selon l'une des revendication 1 à 7, caractérisé en ce que l'on dispose la bande pour qu'au moins une paroi appartienne à un plan sensiblement parallèle à la direction d'une génératrice du cylindre.

## Claims

1. Method for producing a cellular structure intended to cover a fictive or non fictive cylindrical surface, comprising the following stages :

   a. A strip is defined, this extending substantially in a plane and a curve, that is, comprising at least one non rectilinear part, this strip being defined by a homothetic curve (64) forming part of the external curve defining the cross section of the cylinder for a given ratio and by a curve obtained by providing, at a certain distance (e) in an outwards direction, a curve (65) parallel to the homothetic curve, (e) representing the thickness of the said structure.

   b. A reference line (59) is defined on the said strip, parallel to the inner edge of the said strip of given length.

   c. On the said reference line, pairs of points ($C_0$, $C_1$ - $C_2$, $C_3$ - $C_{2j}$, $C_{2j+1}$) are marked, these being regularly spaced and successive, in order to define the surfaces of the cells.

   d. For each of the points comprising a pair, a straight line is defined, parallel to a transversal straight line (1), its direction being substantially perpendicular either to the said reference line or to the straight line joining the two points of the said pair, these two straight lines defining, on the said strip, a surface with parallel sides.

   e. Between these is assembled either surfaces with parallel sides or surfaces with non parallel sides in order to obtain the said structure.

2. Method for producing a cellular structure intended to cover a fictive or non fictive cylindrical surface, comprising the following stages :

   a. A helical strip is defined, formed of substantially plane spiral turns and of given diameter, having a radial height (e) corresponding to the thickness of the said structure.

   b. A circular reference line is defined on the said strip.

   c. On the said reference line, pairs of points ($C_0$, $C_1$ - $C_2$, $C_3$ - $C_{2j}$, $C_{2j+1}$) are marked, these being regularly spaced and successive, in order to define the surfaces of the cells.

   d. For each of the points comprising a pair, a straight line is defined, parallel to a transversal straight line (1), its direction being substantially perpendicular either to the said reference line or to the straight line joining the two points of the said pair, these two straight lines defining, on the said strip, a surface with parallel sides.

   e. Between these is assembled either surfaces with parallel sides or surfaces with non parallel sides in order to obtain the said structure.

3. Method in accordance with one of claims 1 to 2, characterised in that the said transversal straight line substantially passes in the vicinity of the point located in the middle of the rectilinear or curvilinear segment, defined by the reference line joining the two points of the said pair.

4. Method in accordance with one of claims 1 to 3, characterised in that the said strip is positioned to form at least one cell comprising at least one surface (92) having two substantially parallel edges defining a first plane and comprising at least one surface having two coplanar non-parallel edges defining a second plane, in order that the cell so formed is such that the angle defined by the first plane with the direction defined by one of the generatrices (d) of the cylinder is less than the angle defined by the second plane with this same direction.

5. Method in accordance with one of claims 1 to 4, characterised in that several substantially hellcal strips are used.

6. Method in accordance with one of claims 1 to 5, characterised in that several strips are used, each of these strips being closed onto itself.

7. Method in accordance with one of claims 1 to 6, characterised in that the strip is arranged so that at least one surface forms part of a plane which is substantially perpendicular to the direction of the generatrix of the said cylinder.

8. Method in accordance with one of claims 1 to 7, characterised in that the strip is arranged so that at least one surface forms part of a plane which is substantially parallel to the direction of a generatrix of the cylinder.

## Patentansprüche

1. Verfahren zum Herstellen einer zell- bzw. wabenförmigen Struktur, die dazu bestimmt ist, eine gegebenenfalls fiktive zylindrische Oberfläche zu überdecken, die folgenden Stufen umfassend:

a) man definiert ein Band, das sich im wesentlichen in einer Ebene erstreckt und gekrümmt ist, d.h. welches wenigstens einen nicht geradlinigen Teil umfaßt, wobei dieses Band begrenzt ist durch eine homothetische Krümmung (64) der Außenkrümmung, welche den geraden Querschnitt des Zylinders in einem gegebenen Verhältnis und durch eine erhaltene Krümmung begrenzt, indem man unter einer gewissen Entfernung (e) nach außen eine Krümmung (65) parallel zur hypothetischen Krümmung aufträgt, wobei (e) die Dicke dieser Struktur darstellt;

b) man definiert auf diesem Band eine Bezugslinie (59) parallel zum Innenrand dieses Bandes gegebener Länge;

c) man markiert auf dieser Bezugslinie Punktepaare ($C_0$, $C_1$ - $C_2$, $C_3$ - $C_{2j}$, $C_{2j+1}$), die unter regelmäßigem Abstand vorgesehen sind und aufeinander folgen, um die Wandungen der Zellen zu begrenzen;

d) für jeden der Punkte eines Paares definiert man eine Gerade parallel zu einer quer verlaufenden Geraden (L) einer Richtung, die im wesentlichen senkrecht entweder zu dieser Bezugslinie oder zu der die beiden Punkte dieses Paares verbindenden Geraden ist, wobei diese beiden Geraden auf diesem Band eine Wandung mit sog. parallelen Seiten begrenzen; und

e) man baut untereinander zusammen entweder Wände mit parallelen Seiten oder Wände mit nicht parallelen Seiten, um diese Struktur zu erhalten.

2. Verfahren zum Herstellen einer zell- bzw. wabenförmigen Struktur, die dazu bestimmt ist, eine gegebenenfalls fiktive zylindrische Oberfläche zu überdecken, die folgenden Stufen umfassend:

a) man definiert ein spiralförmiges Band, das aus im wesentlichen planen Windungen und gegebenem Durchmesser geformt ist und eine radiale Höhe (e) entsprechend der Dicke dieser Struktur aufweist;

b) man definiert auf diesem Band eine kreisförmige Bezugslinie;

c) man markiert auf dieser Bezugslinie Punktepaare ($C_0$, $C_1$ - $C_2$, $C_3$ - $C_{2j}$, $C_{2j+1}$), die regelmäßig und aufeinanderfolgend zur Begrenzung der Wandungen der Zellen unter Abstand angeordnet sind;

d) für jeden der Punkte eines Paares definiert man eine Gerade parallel zu einer transversal verlaufenden Geraden (L), deren Richtung im wesentlichen senkrecht entweder zur Bezugslinie oder zu der die beiden Punkte des Paares verbindenden Geraden ist, wobei dieser beiden Geraden auf diesem Band eine Wandung mit sog. parallelen Seiten begrenzen;

e) man fügt untereinander entweder Wandungen mit parallelen Seiten oder Wandungen mit nicht parallelen Seiten zum Erhalt dieser Struktur zusammen.

3. Verfahren nach einem der Ansprüche 1 oder 2, dadurch gekennzeichnet, daß diese transversale Gerade im wesentlichen benachbart dem Punkt verläuft, der sich in der Mitte des geradlinigen oder krummlinigen Segments befindet und durch die die beiden Punkte dieses Paares verbindende Bezugslinie definiert ist.

4. Verfahren nach einem der Ansprüche 1 bis 3, dadurch gekennzeichnet, daß man dieses Band so anordnet, daß wenigstens eine Zelle geformt wird, die wenigstens eine Wand (92) mit zwei Kanten im wesentlichen parallel verlaufend umfaßt, die eine erste Ebene bilden und wenigstens eine Wandung mit zwei nicht parallelen koplanaren Kanten umfaßt, die eine zweite Ebene bilden und damit die so gebildete Zelle derart ist, daß der durch die erste Ebene mit der durch eine der Erzeugenden (d) des Zylinders gebildeten Richtung kleiner als der durch die zweite Ebene mit eben dieser Richtung gebildete Winkel ist.

5. Verfahren nach einem der Ansprüche 1 bis 4, dadurch gekennzeichnet, daß man mehrere im wesentlichen spiralförmige Bänder verwendet.

6. Verfahren nach einem der Ansprüche 1 bis 5, dadurch gekennzeichnet, daß man mehrere Bänder verwendet, wobei jedes dieser Bänder sich auf sich selbst schließt.

7. Verfahren nach einem der Ansprüche 1 bis 6, dadurch gekennzeichnet, daß man das Band so anordnet, daß wenigstens eine Wand zu einer Eben im wesentlilchen senkrecht zur Richtung der Erzeugenden dieses Zylinders gehört.

8. Verfahren nach einem der Ansprüche 1 bis 7, dadurch gekennzeichnet, daß man das Band so anordnet, daß wenigstens eine Wand zu einer Ebene im wesentlichen parallel zur Richtung einer Erzeugenden des Zylinders gehört.

FIG.1

EP 0 167 416 B1

**FIG.2**

**FIG.3**

**FIG.5**

**FIG.4**

## FIG.6

## FIG.7

**FIG.8**

**FIG.9**

**FIG.10**

## FIG.11

## FIG.12

## FIG.13

**FIG.14**

**FIG.15**

**FIG.16**

**FIG.17**